# EUROPÄISCHE PATENTANMELDUNG

(11) **EP 3 417 748 A2**
(43) Veröffentlichungstag der Anmeldung: **26.12.2018**
(21) Anmeldenummer: 18175653.7
(22) Anmeldetag: 02.06.2018
(51) Int. Cl.: A47J 37/07

(54) **MULTIFUNKTIONALER OFEN**

(30) Priorität: 02.06.2017 DE 202017103369 U
(71) Anmelder: Gürtler, Andreas, 21073 Hamburg (DE); Thi, Lan Pham, 21073 Hamburg (DE); König, Friedrich Martin, 21073 Hamburg (DE)
(72) Erfinder: Gürtler, Andreas, 21073 Hamburg (DE); Thi, Lan Pham, 21073 Hamburg (DE); König, Friedrich Martin, 21073 Hamburg (DE)
(74) Vertreter: Müller Schupfner & Partner Patent- und Rechtsanwaltspartnerschaft mbB

(57) **Zusammenfassung**

Gegenstand der Erfindung ist ein multifunktionaler Ofen zum Backen, Grillen, Garen, Räuchern oder Aromatisieren von Nahrungsmitteln umfassend eine Ofenbodenplatte und eine auf der Ofenbodenplatte angeordnete Ofenhaube, wobei sich zwischen Ofenbodenplatte und Ofenhaube ein Ofenraum aufspannt, aufweisend weiterhin mindestens eines der folgenden drei Merkmale:
- eine höhenverstellbare Feuerschale im Ofenraum,
- unter der Ofenbodenplatte angeordnete Pfannen,
- mindestens eine Vertiefung in der Ofenbodenplatte.

## Beschreibung

Die Erfindung betrifft einen multifunktionalen Ofen zum Backen, Grillen, Garen, Räuchern oder Aromatisieren von Nahrungsmitteln umfassend eine Ofenbodenplatte und eine auf der Ofenbodenplatte angeordnete Ofenhaube, wobei sich zwischen Ofenbodenplatte und Ofenhaube ein Ofenraum aufspannt, aufweisend weiterhin mindestens eines der folgenden drei Merkmale:
- eine höhenverstellbare Feuerschale im Ofenraum,
- unter der Ofenbodenplatte angeordnete Pfannen,
- mindestens eine Vertiefung in der Ofenbodenplatte.

### Stand der Technik

Holz- oder holzkohlebefeuerte gemauerte Back- oder Garöfen sind bekannt, insbesondere als Pizzaöfen. Der Aufbau solcher Öfen ist aufwändig, da der Ofen nicht nur gemauert, sondern zusätzlich ausschamottiert oder mit feuerfesten Kacheln ausgekleidet werden muss.

Aus DE 10147384 A1 ist ein Ofen aus Ton bekannt. Der Ofen kann mit Holz oder Holzkohle befeuert werden. Er speichert Wärme, so dass auch nach Erlöschen der Glut lange die zum Zubereiten von Speisen notwendige Wärme abgegeben wird. Der Ofen ist aus mehreren Tonteilen hergestellt, die aufeinander aufgesetzt bzw. aneinander angesetzt werden, beispielsweise einer Grundplatte, einem Ofenkörper und einem Rauchabzug. Auf diese Weise kann der Ofen an seinem Standort auseinandergenommen, die einzelnen Teile an einen anderen Standort transportiert und dort wieder zusammengebaut werden.

Die WO 2005/082213 A1 offenbart einen Ofen zum Backen, Grillen und Garen von Nahrungsmitteln für beispielsweise Garten-, Camping- oder Freizeiteinrichtungen, welcher aus zusammensetzbaren Einzelsegmenten gefertigt ist. Der Ofenraum wird durch eine Ofenhaube und die Ofenbodenplatte gebildet. Das Zubereiten der Nahrungsmittel erfolgt auf der Ofenbodenplatte.

Die obigen Öfen sind aus mineralischen Werkstoffen aufgebaut. Diese sind relativ aufwändig in der Verarbeitung, schwer, und ermöglichen für ein stabiles Produkt lediglich eine relativ eingeschränkte Formgebung, weil stets ausreichende Wandstärken zur Verfügung gestellt werden müssen. Gebrannter Ton ist beispielsweise relativ spröde, so dass er bei der Benutzung leicht beschädigt werden kann. Nachteilig bei den zuvor beschriebenen Öfen ist zudem, dass einzig der Ofeninnenraum dazu genutzt werden kann, Speisen zuzubereiten.

### Aufgabe der Erfindung

Es ist Aufgabe der Erfindung, einen Ofen bereitzustellen, der vielseitig einsetzbar ist, unterschiedliche Möglichkeiten für die Zubereitung von Speisen bietet und nicht notwendig aus schweren mineralischen Materialien, wie gebrannten Tonen oder hydraulisch abbindenden anorganischen Materialen, aufgebaut ist.

### Zusammenfassung der Erfindung

Obige Aufgabe wird durch einen Ofen nach Anspruch 1 gelöst. Vorteilhafte Ausgestaltungen und Weiterbildungen ergeben sich aus den abhängigen Ansprüchen oder sind nachstehend beschrieben.

Der multifunktionale Ofen ist zum Backen, Grillen, Garen, Räuchern oder Aromatisieren von Nahrungsmitteln geeignet und umfasst eine Ofenbodenplatte und eine auf der Ofenbodenplatte angeordnete Ofenhaube, so dass sich zwischen Ofenbodenplatte und Ofenhaube ein Ofenraum erstreckt. Gekennzeichnet ist der Ofen weiterhin durch mindestens eines der folgenden drei Merkmale:
(a) eine höhenverstellbare Feuerschale im Ofenraum,
(b) unter der Ofenbodenplatte angeordnete Pfannen,
(c) mindestens eine Vertiefung, vorzugsweise mindestens eine rinnenförmige Vertiefung in der Ofenbodenplatte, die im Offenraum auf der Offenbodenplatte ausgebildet ist und an die Ofenhaube angrenzt.

Die Ofenhaube weist zumindest eine seitliche Öffnung auf und vorzugsweise zusätzlich zumindest eine obere Öffnung (insbesondere für die Ausgestaltung (a)) zum Aufsetzen eines Gefäßes, einer Platte oder eines Rostes zur Nahrungsmittelzubereitung.

### Detaillierte Beschreibung der Erfindung

Der erfindungsgemäße Ofen umfasst mindestens eine Ofenbodenplatte und mindestens eine auf der mindestens einen Ofenbodenplatte angeordnete Ofenhaube, die mit der wenigstens einen Ofenbodenplatte wenigstens einen Ofenraum bildet. Ofenbodenplatte und Ofenhaube können auch als ein integrales Teil ausgebildet sein oder sind miteinander lösbar verbunden. Bevorzugt sind Ofenhaube und Ofenbodenplatte zweiteilig ausgebildet und die Ofenhaube ist auf die Ofenbodenplatte nur aufgesetzt.

Die Ofenbodenplatte ist aus einem feuerfestem Material hergestellt. In Betracht kommen feuerfeste Materialien, die Temperaturen von größer 500°C, vorzugsweise größer 1000°C standhalten. Geeignete Materialien sind Gusseisen, wie Gusseisen mit Lamellengraphit oder Gusseisen mit Kugelgraphit, Stahl oder auch mineralische Feuerfeststoffe wie Tone. Bevorzugt ist als Material Gusseisen ausgewählt.

Nach einer bevorzugten Ausgestaltung ist die Ofenbodenplatte aus Gusseisen oder Stahl und weist eine Mulde auf, in die Mulde sind eine oder mehre Platten aus einem mineralischen oder keramischen Feuerfestmaterial eingelegt, wie Schamott, Speckstein, Cordierit oder Keramik, insbesondere Cordierit. Vorzugsweise wird von oben betrachtet die innere Kreisfläche von dem Feuerfestmaterial gebildet und der äußere Kreisring ist aus Gusseisen oder Stahl und weist die rinnenförmige Vertiefung auf.

Die Form der Ofenbodenplatte ist unproblematisch und kann vielfältig gestaltet sein. So kann die Ofenbodenplatte etwa eine kreisrunde Form besitzen oder auch oval sein. Auch quadratische, rechteckige oder polygone Formen sind denkbar. Weiterhin kann die Fläche der Ofenbodenplatte variieren. So sind beispielsweise Dimensionen von 0,25 bis 2,25 m² oder sogar noch größer denkbar.

Die Ofenbodenplatte kann einstückig ausgebildet sein oder ist aus mehreren Einzelsegmenten zusammengesetzt. Die Einzelsegmente der Ofenbodenplatte können die Form von Kreisabschnitten, Kreissektoren oder Kreisringsektoren sowie Kreisringen in Verbindung mit wenigstens einem Kreis aufweisen oder dreieckig, rechteckig oder allgemein polygon ausgeführt sein. Die Ofenbodenplatte ist vorzugsweise als flache Scheibe ausgebildet.

Nach einer Ausgestaltung ist die Ofenbodenplatte zweiteilig ausgebildet, in Form einer inneren Kreisfläche und einem äußeren Kreisring. In den Kreisring ist die rinnenförmige Vertiefung eingebracht. Der äußere Kreisring wird auf den inneren Kreis aufgelegt. Vorzugsweise bilden beide im zusammengefügten Zustand eine flache vorsprungfreie Ebene (abgesehen von der rinnenförmigen Vertiefung).

Von der Ofenbodenplatte geht die Erwärmung des Ofenraums aus, weil entweder das Feuermaterial, beispielsweise Briketts, Holz oder Holzkohle auf die Ofenbodenplatte aufgelegt ist oder diese Brenngasauslässe in den Ofenraum aufweist oder selbst mit Brenngas oder Elektrizität beheizt wird.

Das Feuermaterial wird hierbei vorzugsweise in die Vertiefung zur Ausbildung einer Glut eingebracht und hierbei entlang der Innenwand der Ofenhaube ausgebreitet.

Die Ofenhaube ist, wie die Ofenbodenplatte, aus einem der zuvor genannten feuerfesten Materialen hergestellt. Dabei kann die Ofenhaube aus einem anderen Feuerfestmaterial bestehen als die Ofenbodenplatte. Auch gleiche Materialien sind denkbar. Bevorzugt ist die Ofenhaube aus Stahl oder Gusseisen. Die Form der Ofenhaube ist so gewählt, dass diese bündig auf die Ofenbodenplatte aufgesetzt werden kann und so zusammen mit der Ofenbodenplatte den Ofenraum definiert. Dabei kann der umlaufende Fuß der Ofenhaube nach einer Ausführungsform in eine in der Ofenbodenplatte vorgesehene Nut eingreifen. Nach einer anderen Ausgestaltung umgreift die Ofenbodenplatte mittels einer Außenkante oder mehreren Außenkantensegmenten den Fuß der Ofenhaube. Es ist aber auch möglich die Ofenhaube einfach nur auf die Ofenbodenplatte aufzusetzen.

Die Form der Ofenhaube ist wie die Form der Ofenbodenplatte variabel und nicht auf bestimmte Formen begrenzt. So kann diese beispielsweise die Form einer Kalotte oder auch einer Pyramide bzw. eines Kegelstumpfes oder eines Pyramidenstumpfes oder einer Kuppel haben, wie beispielsweise eine Kugelkappe. So entsteht ein Ofenraum, der groß genug ist verschiedene Nahrungsmittel oder Gefäße mit Nahrungsmitteln aufzunehmen.

Nach oben hin weist die Ofenhaube eine Öffnung auf. Vorzugsweise ist diese als horizontalter Schnitt durch die höchste Erhebung der Ofenhaube ausgebildet. Die Form der Öffnung ist z.B. kreisrund, rechteckig oder oval und so gestaltet, dass sie mittels eines Deckels verschlossen werden kann.

Ebenfalls weist die Ofenhaube mindestens eine seitliche Öffnung auf, welche einen Zugang zum Innenraum des Ofenraumes ermöglicht. Vorzugsweise ist die seitliche Öffnung verschließbar, z.B. mit mindestens einer Klappe oder mindestens einer Tür.

Durch die seitliche Öffnung der Ofenhaube lassen sich Speisen zum Beispiel in dafür vorgesehen Behältnissen in den Ofenraum einbringen. Auch ist es möglich durch diese Feuermaterial in den Ofenraum einzubringen bzw. nachzulegen.

Die Ofenbodenplatte und die Ofenhaube spannen in ihrem Inneren den Ofenraum auf. Im Ofenraum werden die zu backenden oder zu garenden Nahrungsmittel direkt oder in entsprechenden Gefäßen eingebracht. Im einfachsten Fall lässt sich der Ofenraum mit einem natürlichen Brennmaterial, beispielsweise Holz oder Holzkohle, direkt beheizen, wobei das Brennmaterial auf der Ofenbodenplatte aufgeschichtet und verbrannt wird. Die Ofenhaube und die Ofenbodenplatte aus einem Feuerfeststoff sind dabei in der Lage, Wärme bzw. Hitze zu speichern, um diese sowohl nach innen auf die Nahrungsmittel als auch nach außen abzustrahlen und damit gleichzeitig als Wärmequelle zu dienen. Dies kann beispielsweise gerade in den Abendstunden, wenn die Außentemperaturen nach Sonnenuntergang merklich sinken, gewünscht sein.

Wenn Ofenbodenplatte und/oder Ofenhaube aus Segmenten gefertigt sind, umfassen die Einzelsegmente der Ofenbodenplatte und/oder die Einzelsegmente der Ofenhaube für die lösbare Verbindung wenigstens eine formschlüssige Verbindungskante oder Verbindungsfläche, insbesondere wenigstens einen Vorsprung und/oder wenigstens eine Vertiefung, vorzugsweise zur Erzeugung einer Verzahnung oder einer Nut-Feder-Verbindung, und/oder wenigstens ein lösbares Verbindungsmittel. Als lösbare Verbindungsmittel sind beispielsweise Haken und Ösen oder Riegel denkbar, die dafür sorgen, dass die Einzelsegmente sicher zusammengehalten werden.

Nach einer weiteren Ausführungsform befindet sich eine Vorrichtung zum Abführen von Rauchgasen in Form eines Schornsteins an der Ofenhaube. Mittels des Schornsteins ist es möglich, etwa bei Vorhandensein einer Abzugsvorrichtung, den erfindungsgemäßen Ofen auch in geschlossenen Räumen zu verwenden, die normalerweise für den Betrieb eines Ofens aufgrund möglicher Rauch- und Abgasentwicklung nicht geeignet bzw. zulässig sind.

Bei dem Schornstein handelt es sich um ein Rohr aus einem der weiter oben beschriebenen Feuerfestmaterialien, vorzugsweise Stahl. Das längliche Rohr, das vorzugsweise etwa lotrecht angeordnet ist, sorgt gleichzeitig durch den Kamineffekt für einen besseren Zug des Ofens.

Vorzugsweise umfasst die Vorrichtung zum Abführen von Rauchgasen eine Abdeckung, welche verhindert, dass z.B. Regenwasser o.ä. beim Betrieb im Freien in den Ofenraum gelangen, die aber gleichzeitig auch den Kamineffekt regulieren kann, in dem diese ganz oder teilweise aufgeschoben wird.

Das Rohr ist auf einer weiteren Öffnung (Schornsteinöffnung) in der Ofenhaube aufgesetzt. Die Schornsteinöffnung ist vorzugsweise jenseits des Zentrums der Ofenhaube angeordnet, z.B. in der Draufsicht im äußeren Kreissegment (größer 50% des Radius des Fußes des Ofenraums). Insbesondere befindet sich die Schornsteinöffnung auf der Seite der Ofenhaube, die der seitlichen Öffnung der Ofenhaube gegenüberliegt.

Weiterhin umfasst der erfindungsgemäße Ofen mindestens eines, vorzugsweise mindestens zwei und insbesondere alle drei der folgenden Merkmale:
So befindet sich nach einer Ausgestaltung eine höhenverstellbare Feuerschale (a) innerhalb Ofenraums. Die Feuerschale besteht aus einem der vorhergenannten Feuerfestmaterialen und ist vorzugsweise so angeordnet, dass sie sich mittig unter der oberen Öffnung innerhalb der Ofenhaube befindet, aber auch weiter nach oben verfahrbar sein kann. Die Feuerschale kann, genau wie auch die Ofenbodenplatte, Feuermaterial aufnehmen oder einen Gasauslass für Brenngas aufweisen. Insbesondere weist die Feuerschale eine wannenförmige Vertiefung auf. Die Feuerschale ist höhenverstellbar. Die Feuerschale kann unten Durchbrechungen aufweise um den Luftzutritt und die Entwicklung von Glut zu fördern.

Die Höhenverstellung der Feuerschale kann so ausgebildet sein, dass die Feuerschale von einer Zahnstange getragen wird, welche mittels einer Kurbel und einem Zahnrad hoch- bzw. runterbewegt werden kann. Die Arretierung kann mit einer Sperrklinke erfolgen, welche das Rückwärtsdrehen eines Sperrrades verhindert, indem die Sperrklinke in das Sperrrad mit asymmetrischen Zahnflanken eingreift.

Die Sperrklinke ist drehbar gelagert und wird z.B. durch Schwerkraft oder Federkraft auf das Sperrrad gedrückt. Die Zahnstange verläuft in einer bevorzugten Ausgestaltung etwa mittig durch die Ofenbodenplatte.

Nach einer bevorzugten Ausgestaltung hat die Ofenhaube die Form einer Kugelkappe aus der oben ein Kugelsegment ausgeschnitten ist, so dass sich eine obere Öffnung der Ofenhaube ergibt.

Die obere Öffnung befindet sich über der Feuerschale. Die Feuerschale, in welcher sich brennendes oder glühendes Feuermaterial befindet, kann in Richtung der oberen Ofenhaubenöffnung bewegt werden oder von dieser weg. Dies ermöglicht es, das Ausmaß der Wärmeentwicklung im Bereich der oberen Öffnung zu steuern.

So ist es möglich, einen Grillrost mit Nahrungsmitteln wie Fleisch oder Gemüse auf der oberen Ofenhaubenöffnung anzuordnen, wobei die Lebensmittel dann durch die in der Feuerschale entstehende Hitze gegrillt, gegart oder einfach nur erhitzt werden. Wenn gewünscht, kann die Feuerschale durch die Öffnung auch zumindest teilweise hindurchgefahren werden.

Weiter ist es möglich, einen Grillspieß von oben durch die Ofenhaubenöffnung einzubringen und zu befestigen, womit z.B. Geflügel im Ofen gegrillt / gegart werden kann, z.B. in Kombination mit der Feuerschale.

Weiter ist es möglich, einen Barbecue-Smoker auf der oberen Ofenhaubenöffnung aufzusetzen, in dem zum Beispiel Fische geräuchert werden können. Üblicherweise befindet sich dafür dann keine Holzkohle in der Feuerschale, sondern natürliches Holz oder auch Holzspäne. Die Rauchgase werden durch den Barbecue-Smoker hindurchgeleitet.

Auch lässt sich eine Pfanne, insbesondere eine Wok-Pfanne in der oberen Ofenhaubenöffnung platzieren, in welcher Lebensmittel gebraten werden können. Die dafür benötigte Wärmeenergie kommt, wie in den vorherigen Ausführungen, aus dem brennenden bzw. glühenden Feuermaterial in der Feuerschale.

In einer weiteren Ausgestaltung umfasst die Ofenbodenplatte eine Vertiefung (c), insbesondere eine rinnenförmige Vertiefung im Bereich des äußeren Umfangs der Ofenbodenplatte entlang des Fußes der Ofenhaube. In einer bevorzugten Ausgestaltung erstreckt sich die rinnenförmige Vertiefung über 50 bis 80% der Länge des Fußes der Ofenhaube.

Die rinnenförmige Vertiefung dient der Aufnahme von Feuermaterial. So kann das Feuermaterial beispielsweise zunächst auf der Ofenbodenplatte aufgeschichtet und entzündet werden. Nach ausreichender Glutentwicklung wird dann das glühende Feuermaterial bzw. Glutmaterial mittels eines Werkzeuges wie z.B. eines Feuerhakens in der rinnenförmigen Vertiefung verteilt. Die so frei gewordene Fläche auf der Ofenbodenplatte kann dann dazu genutzt werden, Speisen auf der Ofenbodenplatte zuzubereiten, z.B. in Behältnissen, die in den Ofenraum eingeschoben werden.

Nach einer bevorzugten Ausführungsform umfasst die Ofenbodenplatte eine verschließbare Ascheklappe, welche vorzugsweise von außerhalb des Ofenraums geöffnet bzw. geschlossen werden kann. Durch die Ascheklappe ist es möglich, das ausgeglühte Feuermaterial, welches sich nach der Zubereitung oder nach einem Grillabend noch auf der Ofenbodenplatte oder in der Rinne befindet, aus dem Ofenraum zu entfernen. In einer bevorzugten Ausführung befindet sich die Ascheklappe gegenüber der seitlichen Öffnung der Ofenhaube bzw. auch unabhängig hiervon, bezogen auf die rinnenförmige Vertiefung, etwa auf der Höhe des halben rinnenförmige Vertiefungsweges.

Das dritte Merkmal (c) sind mehrere unterhalb der Ofenbodenplatte angebrachte Pfannen. Diese Pfannen können jeweils verschiedene Formen und Größen haben, vorzugsweise handelt es sich bei den Pfannen um sogenannte Raclette-Pfannen. Bevorzugt haben die Pfannen dabei eine sich konzentrisch verjüngende Form, so dass mehrere Pfannen nebeneinander angeordnet einen Kreisring bilden.

Die mindestens eine Pfanne kann auf unterschiedlichen Wegen unterhalb der Ofenbodenplatte angebracht werden. In einer Ausgestaltung können L-Profile unterhalb der Ofenbodenplatte angebracht sein, in welche die Pfannen eingeschoben werden.

Die Pfannen sind nach einer anderen Ausgestaltung auf einer Halterung unterhalb der Ofenbodenplatte angeordnet. Die Halterung hat die Form eines Kreisringes oder eines Segments oder mehrerer Segmente eines Kreisringes, der/die nach unten parallel verschoben dem äußeren Umfang der Ofenbodenplatte folgt/folgen. Die Halterung wird von der Ofenbodenplatte oder den Füssen des Ofens gehalten

Die Halterung ist zur Aufnahme mehrerer Raclette-Pfannen befähigt. Bevorzugt weist die Halterung eine erhöhte Kante auf, die als hinterer Einschubanstoß für die Pfannen dient und welche ein Herausrutschen der Pfanne(n) verhindert. Die Halterung weist einen solchen Abstand zur Ofenbodenplatte auf, dass sich die Pfanne(n) bequem in den so geformten Zwischenraum einschieben lassen und diese andererseits gleichzeitig genügend Wärme von der Ofenbodenplatte erhalten, um die in der Pfanne(n) befindliche Speisen zu garen.

Nach einer bevorzugten Ausgestaltung sind die Raclette-Pfannen unterhalb der rinnenförmigen Vertiefung angeordnet,

Die Ofenbodenplatte steht z.B. auf mehreren Füssen.

Nachfolgend werden unterschiedliche bevorzugte Funktionsweisen des erfindungsgemäßen multifunktionalen Ofens näher beschrieben.

In einer ersten Betriebsweise befindet sich ein Feuerstoff wie Brenngas, Holz oder Holzkohle in der Feuerschale. Die Feuerschale ist mittels einer Vorrichtung, mechanischer oder elektrischer Art, höhenverstellbar. So lässt sich die Feuerschale problemlos nach oben, in Richtung der in der Ofenhaube befindlichen oberen Öffnung bewegen, welche in dieser Ausgestaltung obligatorisch ist. Die Feuerschale ist z.B. an einem Ende einer Zahnstange befestigt. Die Zahnstange befindet sich vorzugsweise mittig unterhalb der Feuerschale und verläuft senkrecht, ebenfalls mittig, durch die Ofenbodenplatte. Die Stange ist mittels einer herkömmlichen mechanischen Vorrichtung, z.B. eines Zahnradantriebes, unterhalb des Ofenbodenplatte befestigt und wird mittels dieser Vorrichtung auf- und abgefahren. Der Zahnradantrieb kann händisch oder auch elektrisch betrieben werden.

Nach erfolgter Entzündung des Feuerstoffes und ausreichender Glutentwicklung ist es dann möglich, die Feuerschale in Richtung der Öffnung zu bewegen. So kann die Feuerschale dann als Heizquelle genutzt werden, um in einer Ausführungsform eine Wok-Pfanne, welche in die Öffnung der Ofenhaube platziert wurde, zu beheizen und so Speisen zuzubereiten. Die Heizleistung kann durch den Abstand zwischen Feuerschale und der Öffnung in der Ofenhaube variiert werden. Bei kürzerem Abstand wird mehr Wärmeenergie auf den Boden der Wok-Pfanne übertragen.

In einer weiteren Ausgestaltung kann anstelle einer Wok-Pfanne ein sogenannter Barbecue-Smoker auf der oberen Öffnung der Ofenhaube platziert werden. In dieser Ausführungsform ist es dann möglich, Fisch oder Fleisch oder andere Nahrungsmittel im Rauch zu garen und zu aromatisieren. Üblicherweise wird dafür ein anderer Brennstoff als Holzkohle verwendet, z.B. Holzspäne oder Holzstücke.

In einer anderen Ausgestaltung kann ein Grillrost auf der oberen Öffnung der Ofenhaube platziert werden und der multifunktionale Ofen so als Grill genutzt werden. Der Grillrost kann eine umlaufende ringförmige Wanne aufweisen, um Fett aufzufangen.

Die Wanne ist dann außerhalb der oberen Öffnung angeordnet. Der Grillrost kann ausgehend von seiner Mitte leicht nach unten gebogen sein, so dass etwaiges Fett entlang der Stäbe vom Zentrum weg nach unten fließt und in der Wanne abtropft.

Nach einer anderen Betriebsweise befindet sich ein Feuerstoff wie Brenngas, Holz oder Holzkohle auf der Ofenbodenplatte und heizt den Ofenraum nach dem Anzünden entsprechend auf. Nach ausreichender Glut- bzw. Wärmeentwicklung, d.h. nachdem sich der Ofenraum ausreichend aufgeheizt hat, kann das Glutmaterial beispielsweise mittels eines Feuerhakens oder Schabers oder unter Zuhilfenahme eines anderen Hilfsmittels in die im äußeren Umfang der Offenbodenplatte angeordnete rinnenförmige Vertiefung geschoben werden. Es ist dann möglich, Nahrungsmittel wie Pizzen, Gemüse, Grillfleisch, Fisch o.ä. auf die Ofenbodenplatte zu legen und diese innerhalb des aufgeheizten Ofenraumes zuzubereiten bzw. zu garen. Genauso ist es möglich die Ofenbodenplatte elektrisch zu erhitzen.

In dieser Ausgestaltung ist es auch möglich, dass sich unterhalb der mit glühendem Brennstoff befüllten rinnenförmige Vertiefung die zuvor beschriebenen, mit Nahrungsmitteln bestückten Pfannen in Form von Raclette-Pfannen zwischen den unterhalb der Ofenbodenplatte befestigten Raclette-Ring eingeschoben werden.

Besonders bevorzugt ist ein Ofen, welcher sowohl eine Feuerschale, als auch am äußeren Umfang der Ofenbodenplatte eine rinnenförmige Vertiefung aufweist und ggf. zusätzlich Raclette-Pfannen aufnimmt.

In noch einer weiteren Ausgestaltung ist der Einsatz einer Fluidheizung vorgesehen, wobei die Fluidheizung wenigstens ein Beheizungselement innerhalb des Ofenraums und/ oder wenigstens ein Beheizungselement außerhalb des Ofenraums umfasst.

In vielen Wohngebieten wird die Beheizung mit Holz oder Holzkohle als Belästigung empfunden bzw. sie ist gesetzlich untersagt. Bei dem erfindungsgemäßen Ofen ist somit in einer Ausgestaltung eine Beheizung durch Gas oder elektrisch möglich, um die erforderliche Temperatur für den Back-, Grill-, oder Garprozess zu erreichen.

In solch einer Ausgestaltung befindet sich dann anstelle der Feuerschale ein Gasbrenner am oberen Ende der Zahnstange. Die Gaszuleitung verläuft mittels eines Gasschlauchs durch die Zahnstange.

In einer anderen Ausgestaltung befinden sich Gasbrenner innerhalb der in der Ofenbodenplatte befindlichen rinnenförmigen Vertiefung. Die Gaszuleitung erfolgt in dem Fall durch die in der rinnenförmigen Vertiefung befindlichen Ascheklappe.

Dem Fachmann ist klar, dass sich die letzten zwei Ausgestaltungen auch mit elektrischen Heizstäben bewerkstelligen lassen. Dafür werden lediglich Stromkabel anstelle von Gaszuleitungen benötigt.

Der Ofen gemäß der Erfindung ist insbesondere für den Einsatz im Außenbereich, beispielsweise im Garten, in Freizeit- und Campingeinrichtungen, konzipiert, ist aber auch in geschlossenen Räumen, beispielsweise im Wohnbereich, Keller oder Garage einsetzbar, wenn ein geeigneter Rauchabzug oder ausreichende Belüftung der Räumlichkeiten gewährleistet ist.

Mit dem Ofen ist es möglich, gleichzeitig zumindest mehrere Arten der Zubereitung von Speisen zu bewerkstelligen. Nämlich einmal im Ofenraum z.B. bei 200°C und einmal über der Feuerschale, z.B. in einer Wok-Pfanne, bei z.B. etwa 400°C und/oder in den Raclette-Pfannen, z.B. bei 150°C. Gleichzeitig ist ein Grillen, Kochen, Braten, Backen, Garen und Warmhalten möglich.

Die Erfindung ist unter Bezugnahme auf die nachfolgenden Zeichnungen beispielhaft erläutert.

Es zeigen jeweils in schematischer Darstellung:
Fig 1: eine Seitenansicht des Ofens;
Fig 2: eine Seitenansicht des Ofens, wobei der Ofen gegenüber Fig. 1 um 90° gedreht dargestellt ist und Schornstein und Grillrost nicht zu sehen sind;
Fig 3: eine Explosionsansicht mehrerer Bauteile des Ofens;
Fig 4: den Barbecue-Smoker;
Fig 5: die Wok-Pfanne;
Fig 6 und 7: seitliche Ansichten, jeweils von oben und unten, der Ofenbodenplatte;
Fig 8: die seitliche Ansicht des Raclette-Rings
Fig 9: eine seitliche Draufsicht auf eine Pfanne.

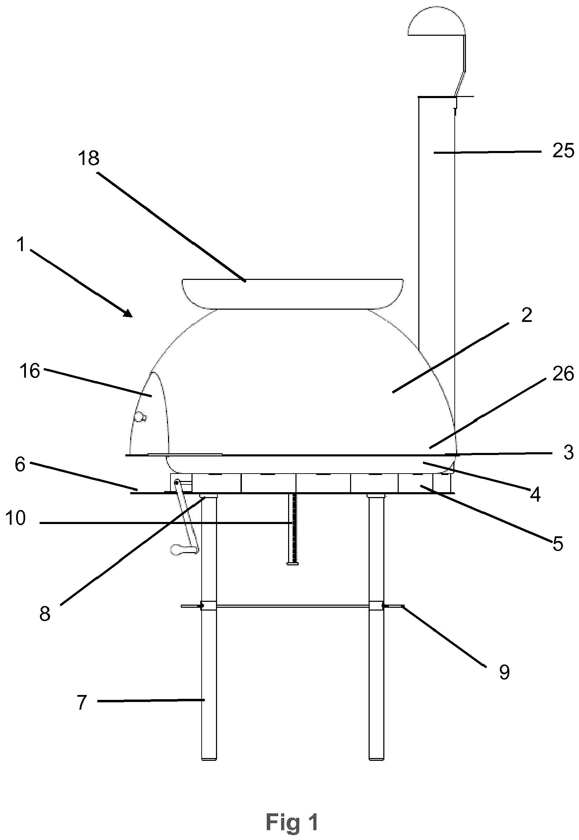

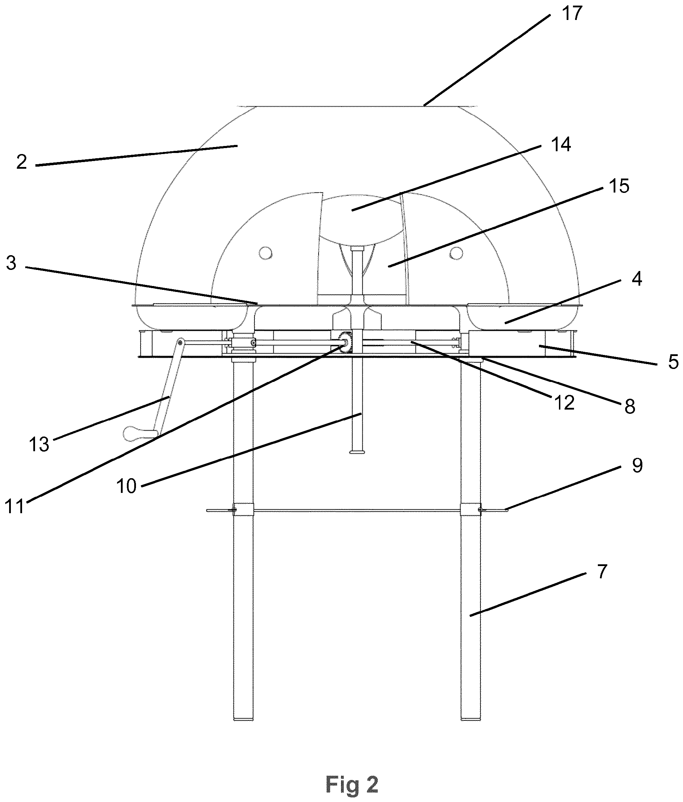

**Fig 1** und **Fig 2** zeigen in Seitenansicht eine vorteilhafte Ausgestaltung eines erfindungsgemäßen multifunktionalen Ofens 1, wobei der Ofen 1 in Fig 2 um 90° gegenüber der Darstellung in Fig 1 gedreht wurde. Die Ofenhaube 2 ist auf die Ofenbodenplatte 3 mit der Fußfläche 26 der Ofenhaube aufgesetzt. Die Ofenhaube hat die Form einer Kugelkappe und weist eine seitliche Öffnung 15 auf, welche mittels zweier viertelkreisförmiger Klappen 16 geschlossen bzw. geöffnet werden kann. Im Bereich des äußeren Umfangs der Ofenbodenplatte 3 befindet sich eine rinnenförmige Vertiefung 4, welche beispielsweise zur Aufnahme glühender Kohle oder Holz geeignet ist.

Unterhalb der rinnenförmigen Vertiefung 4 sind entlang dieser mehrere Pfannen 5 veranschaulicht, welche der Aufnahme von Nahrungsmitteln dienen und welche durch das in der rinnenförmige Vertiefung 4 befindliche Feuermaterial (nicht gezeigt) von oben beheizt werden. Die Pfannen stehen auf einem Raclette-Ring 6, welcher sich unterhalb der Ofenbodenplatte 3 befindet. Der Ofen 1 steht auf vier Beinen 7, wobei die Beine 7 durch im Raclette-Ring 6 befindlichen Hülsen 8 geführt werden. Ungefähr auf der halben Höhe der Beine 7 ist eine Ablagefläche 9 angeordnet. Mittig durch den Raclette-Ring 6 und die Ofenbodenplatte 3 verläuft eine Zahnstange 10, die mittels eines Zahnrades 11, welches auf einer Welle 12 angebracht ist, über eine Kurbel 13 hoch- und runter bewegt werden kann. Am oberen Ende der Zahnstange 10 befindet sich eine Feuerschale 14 in Form einer hohlen Halbkugel, welche dazu vorgesehen ist, Feuermaterial aufzunehmen. Gegenüber der Öffnung 15 ist eine Vorrichtung zum Abführen der Rauchgase in Form eines Schornsteins 25 gezeigt, an dessen oberen Ende sich eine Kappe befindet, welche den Ofenraum vor dem Eindringen von beispielsweise Regenwasser oder Feststoffen wie Blättern schützt.

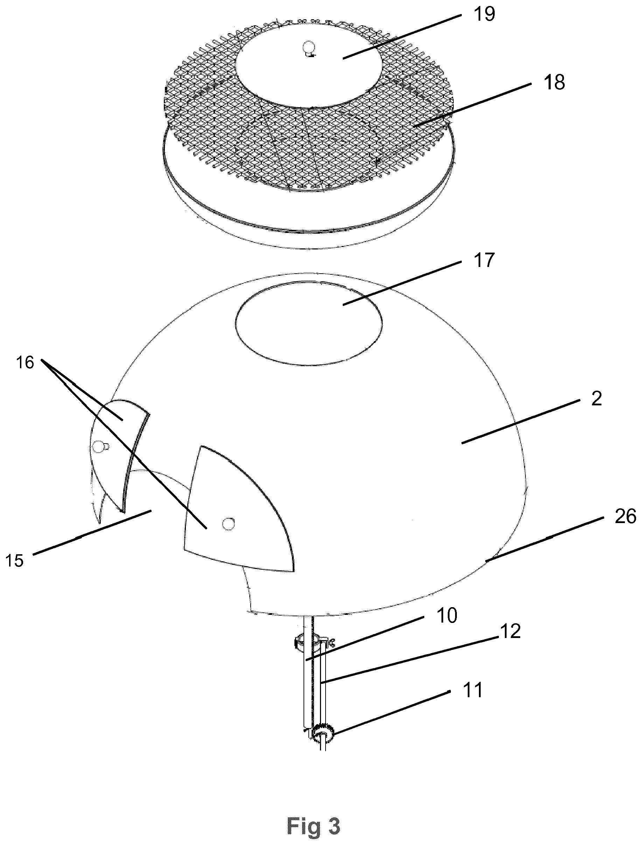

**Fig 3** zeigt in Explosionsansicht mehrere Bauteile eines erfindungsgemäßen Ofens. Auf der Ofenhaube 2, die die Form einer Kugelkappe hat, befindet sich eine Öffnung 17, welche sich mit dem dargestellten Deckel 19 verschließen lässt. Unterhalb der Öffnung 17 befindet sich eine höhenverstellbare Feuerschale 14, in welcher sich Glutmaterial befindet (nicht gezeigt). Die Feuerschale 14 befindet sich am Ende der Zahnstange 10, welche mittels des Zahnrads 11, welches wiederum mittels der Welle 12 betätigt wird und so in Richtung der oberen Öffnung 17 bewegbar ist. Weiter befindet sich eine Grillvorrichtung 18 über der Öffnung 17, auf welcher beispielsweise Fleisch oder andere Nahrungsmittel zubereitet werden können. Die Grillvorrichtung ist in dem gezeigten Beispiel kreisrund dargestellt und weist einen Grillrost und am äußeren Umfang eine Verdickung in Form einer ringförmigen Wanne auf, welche auf die Ofenhaube 2 aufgesetzt werden kann. Dabei wird die Grillvorrichtung 18 durch die Feuerschale 14 erhitzt. Die Wanne der Grillvorrichtung 18 dient gleichzeitig als Tropfschutz. So sammelt sich z.B. aus dem Grillfleisch entweichendes flüssiges Fett darin. An einem unteren Ende der Ofenhaube 2 ist eine Öffnung 15 dargestellt, welche mittels zweier Klappen 16 verschlossen werden kann. Über diese Öffnung ist es möglich, Nahrungsmittel in dem Ofenraum zu bringen.

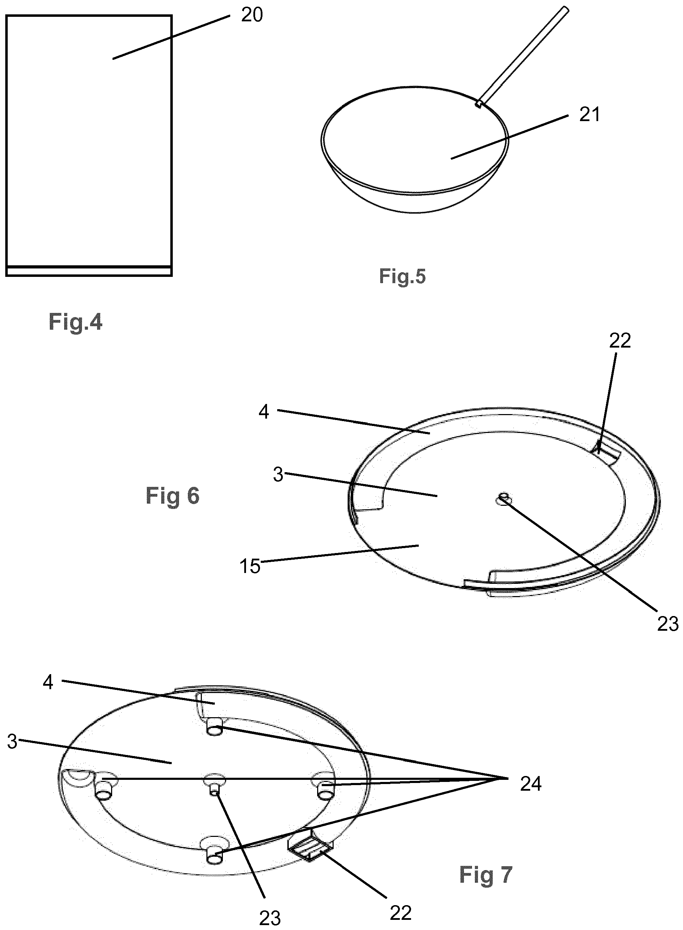

**Fig 4** zeigt in Seitenansicht einen Barbecue-Smoker 20, welcher dazu geeignet ist, auf der oberen Öffnung 17 der Ofenhaube 2 (beide nicht gezeigt) platziert zu werden. In solch einem Barbecue-Smoker lässt sich z.B. Fisch aromatisieren bzw. räuchern.

**Fig 5** zeigt in Seitenansicht eine Wok-Pfanne 21, welche dazu geeignet ist, auf der oberen Öffnung 17 der Ofenhaube 2 (beide nicht gezeigt) platziert zu werden. In solch einer Wok-Pfanne 21 können Lebensmittel beispielsweise gebraten werden.

**Fig 6** zeigt eine seitliche Draufsicht auf eine Ofenbodenplatte 3, welche eine kreisrunde Form hat. Die Ofenbodenplatte weist zumindest teilweise entlang des Umfangs der Ofenbodenplatte am äußeren Umfang eine rinnenförmige Vertiefung 4 auf, welche der Aufnahme von glühendem Feuermaterial (nicht gezeigt) dient. Die rinnenförmige Vertiefung ist im Bereich der Öffnung 15 der Ofenhaube 2 (beides nicht gezeigt) unterbrochen. Etwa gegenüber der Öffnung 15 der Ofenhaube 2 befindet sich in der rinnenförmigen Vertiefung 4 eine verschließbare Ascheklappe 22, welche geöffnet werden kann, um das ausgebrannte Feuermaterial zu entfernen.

Dafür ist es möglich, die Klappe zu öffnen und mittels eines geeigneten Hilfsmittels wie z.B. eines Handbesens, das ausgeglühte Feuermaterial durch die Ascheklappe 22 auszukehren. In der Mitte der Ofenbodenplatte 3 ist eine Öffnung in Form einer Hülse 23 angeordnet, durch welche die Zahnstange 10 geführt ist, die die im Ofenraum befindliche Feuerschale 14 (beides nicht gezeigt) auf- und ab bewegen kann. Nacheiner bevorzugten Ausführungsform sind Zahnstange 10 und Feuerschale 14 abnehmbar.

**Fig 7** zeigt die kreisrunde Ofenbodenplatte 3 der Fig 6 mit der zumindest teilweise entlang des äußeren Umfangs der Ofenbodenplatte 3 verlaufenden rinnenförmigen Vertiefung 4. An der Unterseite weist die Ofenbodenplatte zusätzlich vier Hülsen 24 auf, in welche die Beine 7 (nicht gezeigt) gesteckt werden.

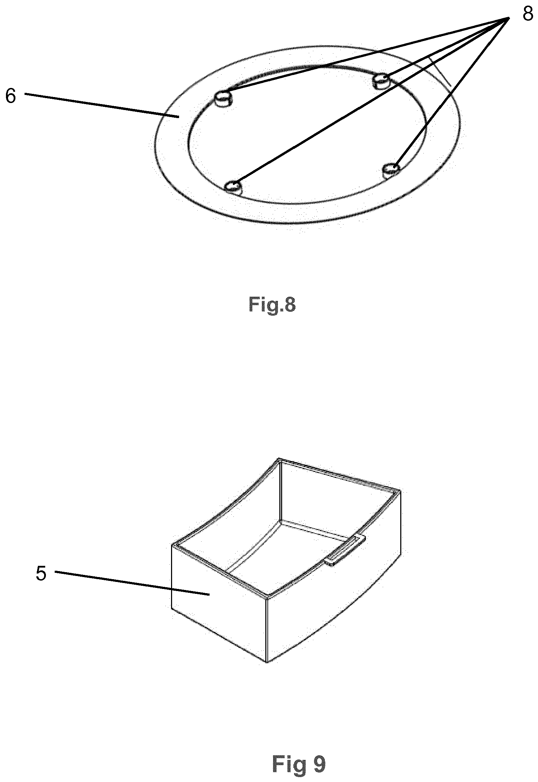

**Fig 8** zeigt eine seitliche Ansicht des Raclette-Rings 6 mit vier Hülsen 8, welche direkt am Raclette-Ring 6 befestigt sind und durch welche die Beine 7 (nicht gezeigt) hindurchgesteckt sind.

Bei den Hülsen 8 kann es sich beispielsweise um Schraubhülsen handeln, durch die der Raclette-Ring 6 auf einer bestimmten Höhe unterhalb der Ofenbodenplatte 3 fixiert wird. Der Raclette Ring hat an der Ringinnenseite eine Erhebung, welche durch die dunklere Linie in der Fig 8 gekennzeichnet ist. Die Innenkante dient als Stoßkante für die Pfanne(n) 5 (nicht gezeigt), welche als Raclette-Pfannen zwischen Ofenbodenplatte 3 und Raclette-Ring 6 geschoben werden und mittels der rinnenförmigen Vertiefung 4 der Ofenbodenplatte 3 (nicht gezeigt) geheizt werden. Der Raclette-Ring 6 ist im vorliegenden Fall symmetrisch aufgebaut.

**Fig 9** zeigt in seitlicher Draufsicht eine Pfanne 5, welche als Raclette-Pfanne verwendet werden kann. Eine Seitenwand ist dabei konzentrisch verjüngt, so dass mehrere Pfannen nebeneinander ringförmig anordbar sind.

**Bezugszeichenliste:**

| Nummer | Bezeichnung |
|---|---|
| 1 | Ofen |
| 2 | Ofenhaube |
| 3 | Ofenbodenplatte |
| 4 | rinnenförmige Vertiefung |
| 5 | Pfanne |
| 6 | Raclette-Ring |
| 7 | Beine |
| 8 | Hülse im Raclette-Ring |
| 9 | Ablagefläche |
| 10 | Zahnstange |
| 11 | Zahnrad |
| 12 | Welle |
| 13 | Kurbel |
| 14 | Feuerschale |
| 15 | seitliche Öffnung in der Ofenhaube |
| 16 | Klappen für seitliche Öffnung der Ofenhaube |
| 17 | obere Öffnung in der Ofenhaube |
| 18 | Grillrost |
| 19 | Deckel für Ofenhaube |
| 20 | BBQ-Smoker |
| 21 | Wok-Pfanne |
| 22 | Ascheklappe |
| 23 | Hülse in der Ofenbodenplatte für Zahnstangendurchlass |
| 24 | Hülse für Beine in der Ofenbodenplatte |
| 25 | Schornstein |
| 26 | Fuß der Ofenhaube |

## Patentansprüche

1. Ofen umfassend:
mindestens eine Ofenbodenplatte (3) und mindestens eine über der mindestens einen Ofenbodenplatte (3) angeordnete Ofenhaube (2), die mit der wenigstens einen Ofenbodenplatte (3) wenigstens einen beheizbaren Ofenraum bildet, gekennzeichnet weiterhin durch mindestens eines der folgenden Merkmale:
(a) mindestens eine höhenverstellbare Feuerschale (14) innerhalb des Ofenraumes;
(b) mindestens eine unterhalb der Ofenbodenplatte (3) angebrachte Pfanne (5);
(c) mindestens eine Vertiefung (4) in der Ofenbodenplatte,
vorzugsweise zumindest (a) und (c).

2. Ofen nach Anspruch 1, wobei dieser eine höhenverstellbare Feuerschale (14) aufweist.

3. Ofen nach zumindest einem der vorherigen Ansprüche, wobei die Ofenbodenplatte eine rinnenförmige Vertiefung (4) im Bereich des äußeren Umfangs der Ofenbodenplatte (3) aufweist.

4. Ofen nach zumindest einem der vorherigen Ansprüche, wobei unterhalb der Ofenbodenplatte (3) mehrere Pfannen (5) angeordnet sind.

5. Ofen nach zumindest einem der vorherigen Ansprüche, wobei die Ofenhaube (2) mindestens eine seitliche Öffnung (15) aufweist.

6. Ofen nach zumindest einem der vorherigen Ansprüche, wobei die Ofenhaube eine obere Öffnung (17) aufweist.

7. Ofen nach einem der vorherigen Ansprüche, wobei die rinnenförmige Vertiefung (4) mindestens eine Ascheklappe (22), vorzugsweise vis-á-vis der seitlichen Öffnung (15) der Ofenhaube, aufweist.

8. Ofen nach einem der vorherigen Ansprüche, wobei die Pfannen (5) Raclette-Pfannen sind und zwischen Ofenbodenplatte (3) und einer Halterung in Form eines Raclette-Rings (6) angeordnet sind, vorzugsweise unter der rinnenförmigen Vertiefung (4), wobei weiter bevorzugt der Raclette-Ring (6) höhenverstellbar ist.

9. Ofen nach zumindest einem der vorherigen Ansprüche, wobei die Ofenhaube (2) eine Schornsteinöffnung mit sich daran anschließendem Schornstein (25) aufweist.

10. Ofen nach zumindest einem der vorherigen Ansprüche, wobei die Ofenbodenplatte (3) von mehreren Beinen (7) getragen wird und vorzugsweise der Raclette-Ring (6) gemäß Anspruch 8 entlang der Beine (7) verschoben werden kann.

11. Ofen nach einem der vorherigen Ansprüche, wobei die Beheizung der Feuerschale (14) und/oder der Ofenbodenplatte (3) mittels Brenngas erfolgt.

12. Ofen nach einem der Ansprüche 1 bis 10, wobei die Beheizung der Feuerschale (14) und/oder der Ofenbodenplatte (3) elektrisch erfolgt.

13. Ofen nach zumindest einem der vorherigen Ansprüche, wobei die Ofenbodenplatte (3) in der Mitte nach oben hin eine im Wesentlichen plane Oberfläche aufweist, die vorzugsweise zum äußeren Rand hin in die rinnenförmige Vertiefung (4) übergeht.

14. Ofen nach zumindest einem der vorherigen Ansprüche, wobei die Ofenbodenplatte und die Ofenhaube aus Gusseisen oder Stahl bestehen, vorzugsweise die Ofenbodenplatte aus Gusseisen oder Stahl und gleichzeitig einem flächigen mineralischen oder keramischen Feuerfestmaterial, das in das Material aus Gusseisen oder Stahl eingesetzt ist.

15. Verwendung eines Ofens gemäß einem der vorhergehenden Ansprüche zum Backen, Grillen, Garen, Räuchern oder Aromatisieren von Nahrungsmitteln.
